# EUROPEAN PATENT APPLICATION

(11) **EP 4 835 830 A1**
(43) Date of publication of application: **04.11.2026**
(21) Application number: 24912310.0
(22) Date of filing: 09.12.2024
(51) Int. Cl.: G06T 19/00, A63F 13/803, G09B 9/042, H04N 5/77, H04N 5/91

(54) **INFORMATION PROCESSING SYSTEM, INFORMATION PROCESSING METHOD, AND PROGRAM**

(30) Priority: 28.12.2023 JP 2023222528
(71) Applicant: Sony Group Corporation, Tokyo 108-0075 (JP)
(72) Inventor: TAJIMA Kazunori, Tokyo 108-0075 (JP); YAMAZAKI Tatsuya, Tokyo 108-0075 (JP)
(74) Representative: Witte, Weller & Partner Patentanwälte mbB
(86) International application number: PCT/JP2024/043356
(87) International publication number: WO 2025/142421

(57) **Abstract**

The present disclosure relates to an information processing system, an information processing method, and a program that can provide a more valuable user experience. A driving simulation system executes a driving simulation using a vehicle selected by a user, and acquires driving data according to an operation of the user on the vehicle and an in-simulator video depicting the vehicle traveling in a virtual space. A camera system captures the vehicle and the user with a camera to acquire a captured video. A moving image creation system creates a moving image using at least the in-simulator video and the captured video. The present technology can be applied to, for example, a content production system that produces content by performing a driving simulation using an actual vehicle.

## Description

### Technical Field

The present disclosure relates to an information processing system, an information processing method, and a program, and particularly relates to an information processing system, an information processing method, and a program that can provide a more valuable user experience.

### Background Art

In recent years, it has been proposed to provide various user experiences such as a realistic driving simulation and content appreciation by using a display device and an acoustic facility, for example, provided inside and outside an electric vehicle in a parked state and also using a user profile, an external vibration device, and a charging device, for example, in combination. Furthermore, with the rise of virtual production, three-dimensional computer graphics (3DCG) has been utilized for production of promotional videos.

PTL 1 discloses a racing game device that performs a racing game using an operation unit provided with a steering wheel, an accelerator, and a brake.

### Citation List

### Patent Literature

PTL 1: JP 2000-229177 A

### Summary

### Technical Problem

As described above, while it has been proposed to provide various user experiences using an electric vehicle in a parked state, it is required to provide a more valuable user experience, for example, to motivate a user to go to a charging station at a slightly distant place and spend time.

The present disclosure has been made in view of the foregoing, and aims to provide a more valuable user experience by secondarily utilizing a 3DCG created by virtual production, a game, or the like.

### Solution to Problem

An information processing system according to one aspect of the present disclosure includes: a driving simulation system configured to execute a driving simulation using a vehicle selected by a user, and acquire driving data according to an operation of the user on the vehicle and an in-simulator video depicting the vehicle traveling in a virtual space; a camera system configured to capture the vehicle and the user with a camera to acquire a captured video; and a moving image creation system configured to create a moving image using at least the in-simulator video and the captured video.

An information processing method or a program according to one aspect of the present disclosure includes: executing a driving simulation using a vehicle selected by a user, and acquiring driving data according to an operation of the user on the vehicle and an in-simulator video depicting the vehicle traveling in a virtual space; capturing the vehicle and the user with a camera to acquire a captured video; and creating a moving image using at least the in-simulator video and the captured video.

According to one aspect of the present disclosure, a driving simulation using a vehicle selected by a user is executed, and driving data according to an operation of the user on the vehicle and an in-simulator video depicting the vehicle traveling in a virtual space are acquired; the vehicle and the user are captured with a camera to acquire a captured video; and a moving image is created using at least the in-simulator video and the captured video.

### Brief Description of Drawings

[Fig. 1]

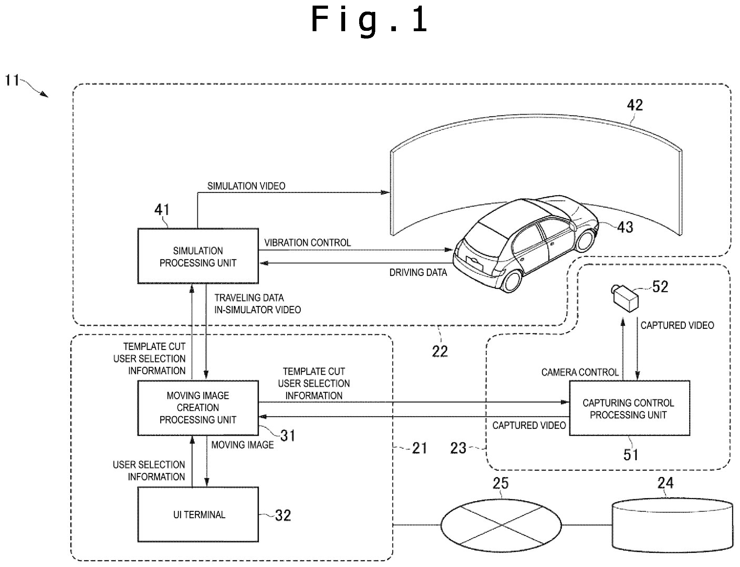

   Fig. 1 is a block diagram illustrating a configuration example of an embodiment of a content production system to which the present technology is applied.
[Fig. 2]

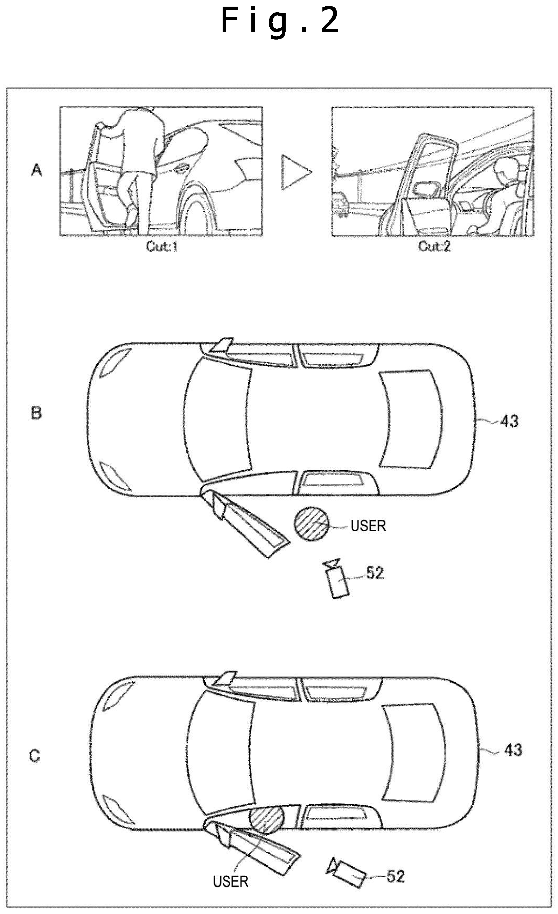

   Fig. 2 is a diagram for describing an example of cuts capturing a state in which a user gets into a vehicle.
[Fig. 3]

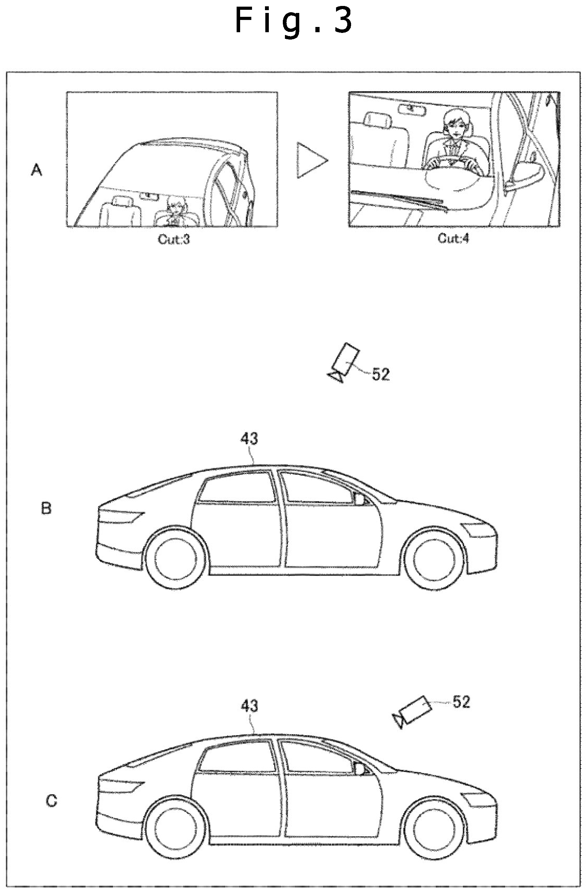

   Fig. 3 is a diagram for describing an example of cuts capturing a state in which a user is driving a vehicle from above the vehicle.
[Fig. 4]

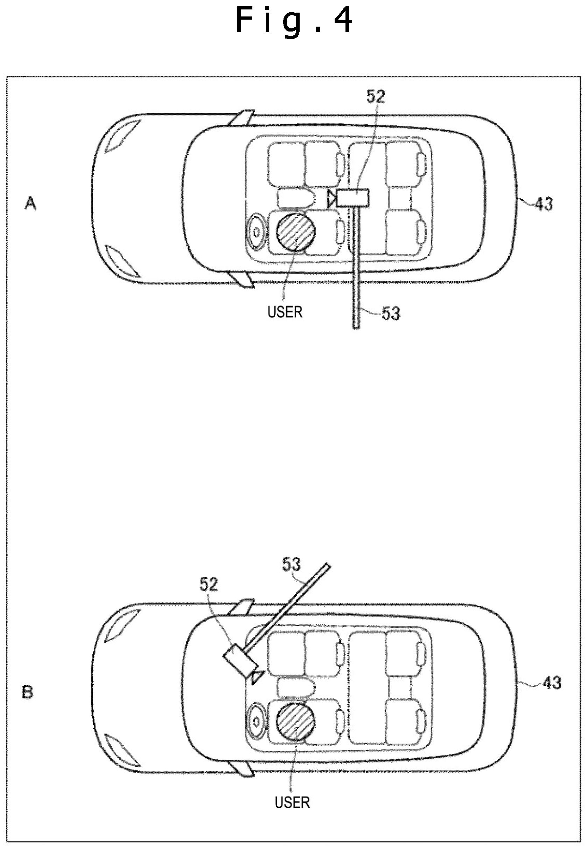

   Fig. 4 is a diagram for describing an example of capturing the inside of the vehicle.
[Fig. 5]

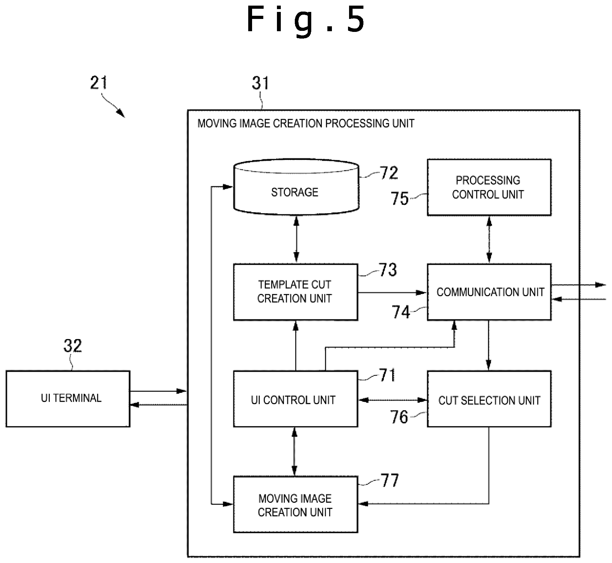

   Fig. 5 is a block diagram illustrating a configuration example of a moving image creation processing unit.
[Fig. 6]

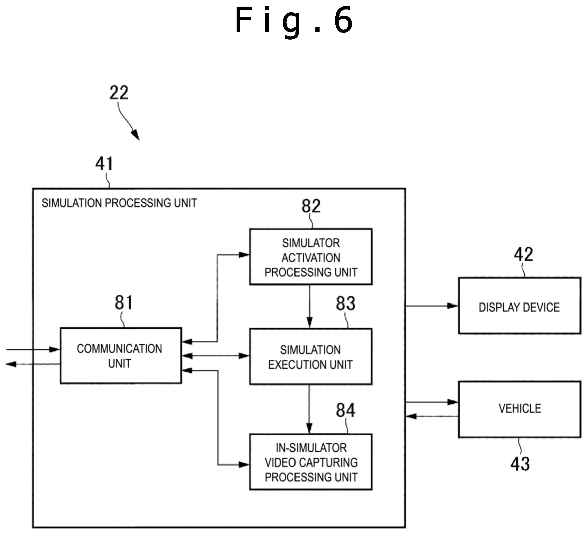

   Fig. 6 is a block diagram illustrating a configuration example of a simulation processing unit.
[Fig. 7]

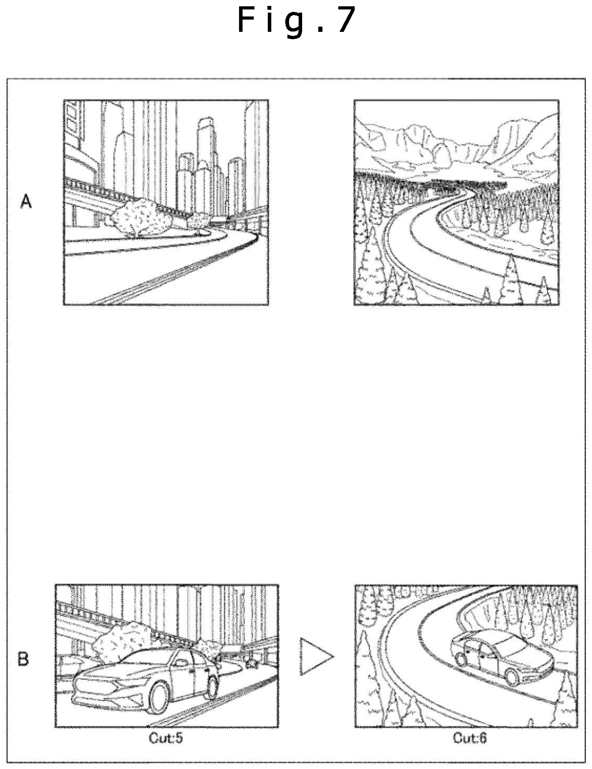

   Fig. 7 is a diagram for describing an example of cuts capturing arrangement of 3DCG model data and a vehicle traveling in a virtual space.
[Fig. 8]

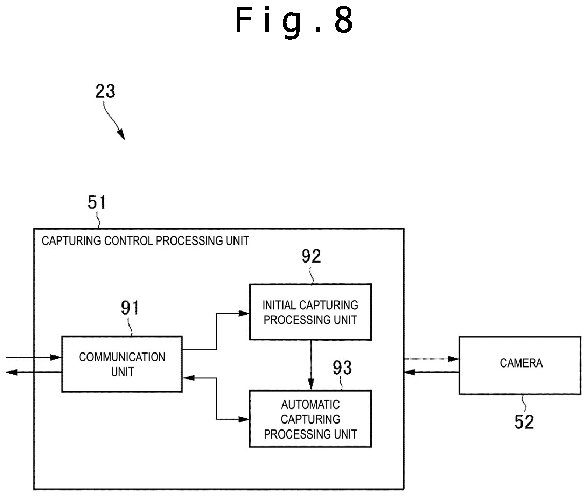

   Fig. 8 is a block diagram illustrating a configuration example of a capturing control processing unit.
[Fig. 9]

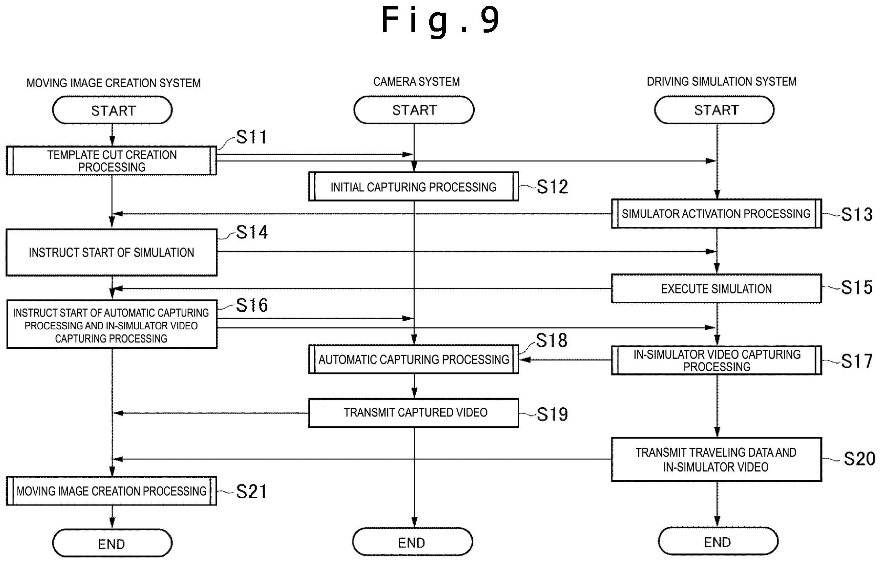

   Fig. 9 is a sequence diagram for describing content production processing.
[Fig. 10]

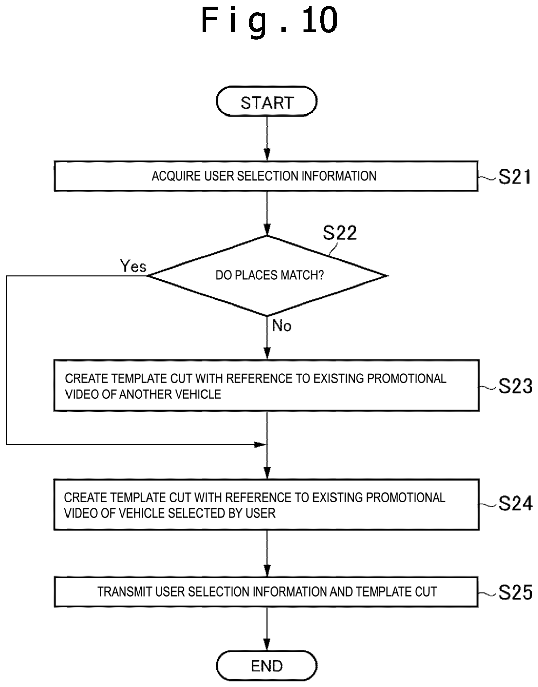

   Fig. 10 is a flowchart for describing template cut creation processing.
[Fig. 11]

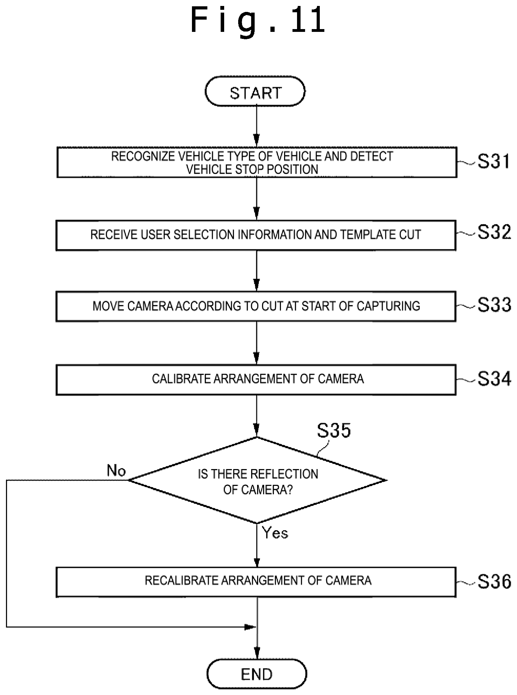

   Fig. 11 is a flowchart for describing initial capturing processing.
[Fig. 12]

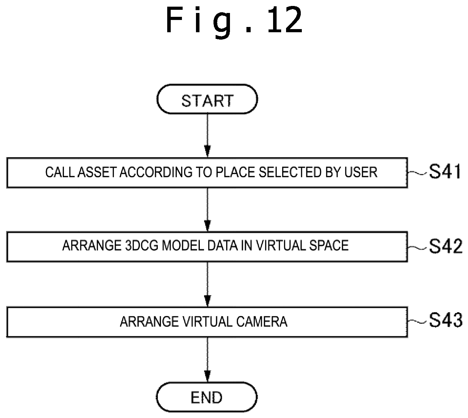

   Fig. 12 is a flowchart for describing simulator activation processing.
[Fig. 13]

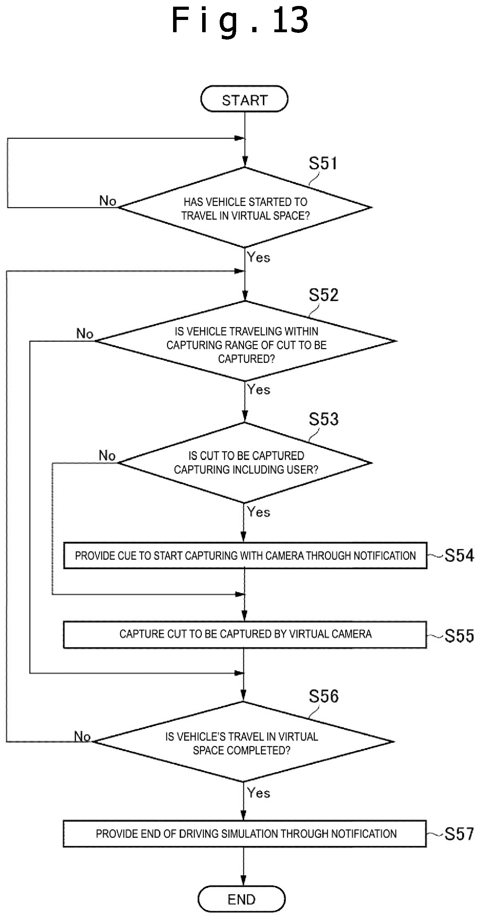

   Fig. 13 is a flowchart for describing in-simulator video capturing processing.
[Fig. 14]

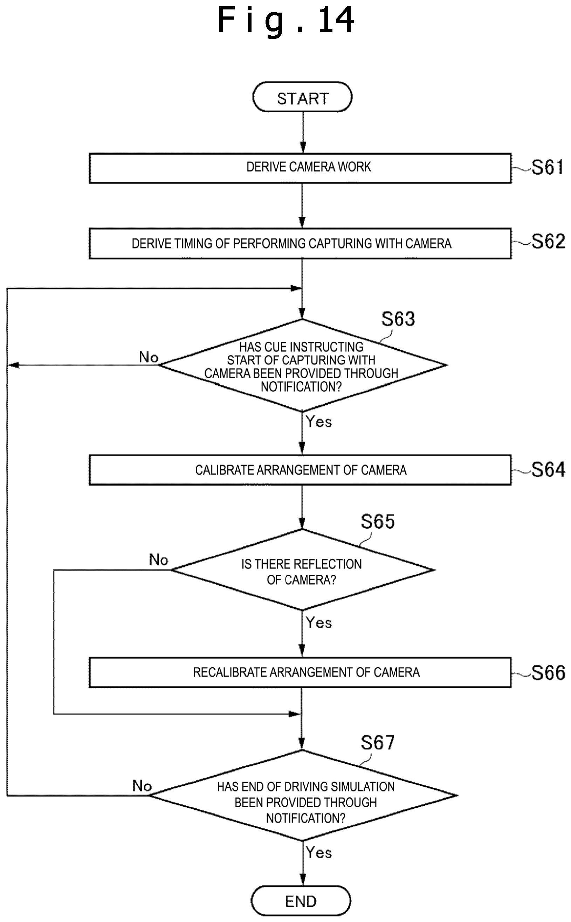

   Fig. 14 is a flowchart for describing automatic capturing processing.
[Fig. 15]

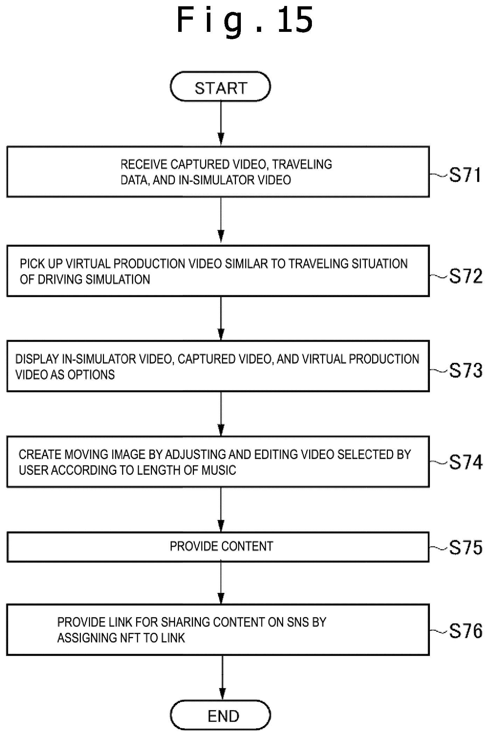

   Fig. 15 is a flowchart for describing moving image creation processing.
[Fig. 16]

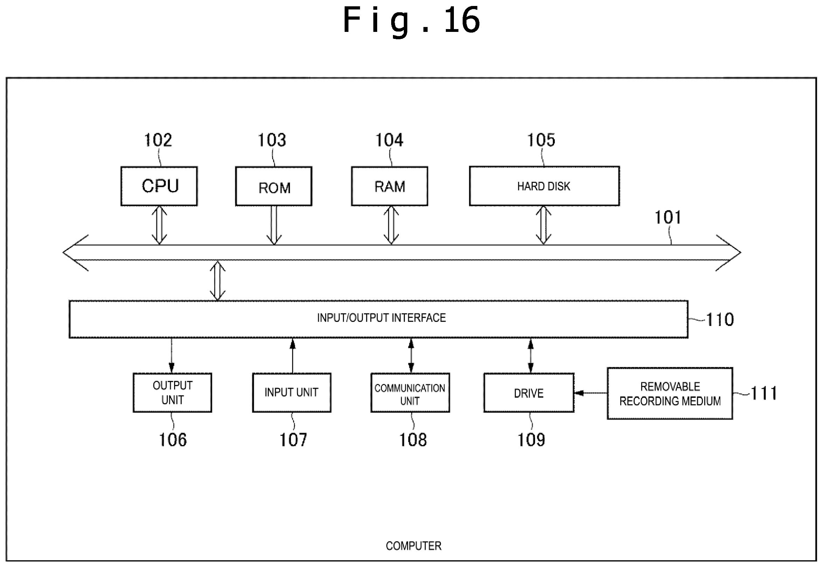

   Fig. 16 is a block diagram illustrating a configuration example of an embodiment of a computer to which the present technology is applied.

### Description of Embodiments

Hereinafter, specific embodiments to which the present technology is applied will be described in detail with reference to the drawings.

### Configuration Example of Content Production System

First, a configuration example of a content production system to which the present technology is applied will be described with reference to Figs. 1 to 8.

Fig. 1 is a block diagram illustrating a configuration example of a content production system 11.

The content production system 11 illustrated in Fig. 1 is assumed to be installed and used in, for example, a vehicle dealer equipped with a charging station for electric vehicles. The content production system 11 can produce content similar to an existing promotional video (e.g., commercial footage) for advertising a vehicle 43 by performing a driving simulation while a user who visits the vehicle dealer to charge an electric vehicle test drives the vehicle 43 exhibited at the vehicle dealer.

For example, in the content production system 11, the vehicle 43 that the user desires to test drive is moved to a predetermined position in front of a display device 42, and the user selects a place to travel in the content and music to be used in the content, for example, and then a camera 52 starts capturing. Then, while a cut in which the user gets into the vehicle 43 is captured by the camera 52 and the driving simulation is performed according to the driving of the vehicle 43 by the user, various cuts of the vehicle 43 are captured by the camera 52 with the display device 42 on which the simulation video of the place selected by the user displayed as the background. In addition, during the driving simulation according to the driving of the vehicle 43 by the user, the state in which the vehicle 43 is traveling in the virtual space corresponding to the place selected by the user is captured by a virtual camera, and in-simulator videos of various cuts are generated.

Thereafter, in the content production system 11, when the driving simulation is ended and a cut in which the user gets off the vehicle 43 is captured by the camera 52, the capturing by the camera 52 is ended. Then, in the content production system 11, the user is presented with the captured video of each cut captured by the camera 52 and the in-simulator video of each cut generated in the driving simulation, and the user can select a favorite cut. Accordingly, the content production system 11 can create a moving image in which videos of the cuts selected by the user are combined, produce content in which the music selected by the user is reproduced together with the moving image, and provide the content to the user. Furthermore, the content production system 11 can assign a non-fungible token (NFT) to a link for sharing content on a social networking service (SNS) and provide the link.

As illustrated in Fig. 1, the content production system 11 includes a moving image creation system 21, a driving simulation system 22, and a camera system 23, and a cloud server 24 is connected to the moving image creation system 21 via a network 25.

The moving image creation system 21 includes a moving image creation processing unit 31 and a user interface (UI) terminal 32.

The UI terminal 32 includes a touch panel, and for example, when the user performs an operation on the touch panel to select items such as the vehicle 43 desired to be test-driven, a place desired to be traveled in the content, and music used in the content, the UI terminal 32 supplies user selection information indicating the content of the selection by the user to the moving image creation processing unit 31.

The moving image creation processing unit 31 refers to each cut constituting the existing promotional video of the vehicle 43 indicated by the user selection information, and creates a template cut for instructing camera work and capturing timing, for example, for capturing a state in which the driving simulation is performed at the place selected by the user. Examples of instructions included in the template cut include an instruction of timing of starting and ending capturing of each cut, an instruction of arrangement and an angle of view of the camera 52 necessary for capturing a captured video of each cut, an instruction of arrangement and an angle of view of a virtual camera necessary for generating an in-simulator video of each cut, and an instruction of capturing including the user in a case where the driver is depicted in each cut. The moving image creation processing unit 31 then supplies the template cut and the user selection information to the driving simulation system 22 and the camera system 23, respectively.

Thereafter, the moving image creation processing unit 31 is supplied with the traveling data and the in-simulator video from the driving simulation system 22, and is supplied with the captured image from the camera system 23. Here, the moving image creation processing unit 31 stocks a plurality of virtual production videos prepared in advance as material for advertising the vehicle 43 (e.g., including material not used in promotional video), and can pick up a virtual production video that is similar to the traveling situation of the driving simulation based on the traveling data. Then, the moving image creation processing unit 31 displays the in-simulator video, the captured video, and the virtual production video on the UI terminal 32 as options for allowing the user to select a video to be used in the content. When the user selects a video to be used in the content from among the options, the moving image creation processing unit 31 creates a moving image by adjusting and editing the video selected by the user in accordance with the length of the music selected by the user, and displays the moving image on the UI terminal 32.

The driving simulation system 22 includes a simulation processing unit 41, the display device 42, and the vehicle 43.

The simulation processing unit 41 executes a driving simulation in which the vehicle 43 virtually travels in a virtual space corresponding to a place indicated by the user selection information supplied from the moving image creation processing unit 31 in accordance with actual driving of the vehicle 43 by the user. For example, the vehicle 43 supplies the simulation processing unit 41 with driving data indicating the content of driving (e.g., angle of tire or degree of acceleration and deceleration) according to the operation of the user on a steering wheel, a pedal, or the like. The simulation processing unit 41 controls a built-in active suspension, a seat vibration device, and an external vibration device, for example, that generate vibrations (e.g., vibration of inclining to left and right according to cornering, and vibration of inclining to front and rear according to acceleration and deceleration) to be generated in the vehicle 43 according to the driving data. At this time, the simulation processing unit 41 generates a simulation video that is linked to the scenery in the simulator corresponding to the virtual space in which the vehicle 43 is traveling, and displays the simulation video on the display device 42.

The simulation processing unit 41 then generates an in-simulator video depicting the vehicle 43 traveling in the virtual space by performing capturing with the virtual camera in accordance with the template cut supplied from the moving image creation processing unit 31. Thereafter, when the virtual traveling of the vehicle 43 is completed for all cuts that need to be captured according to the template cut, the simulation processing unit 41 ends the driving simulation and supplies the traveling data and the in-simulator video to the moving image creation processing unit 31.

The camera system 23 includes a capturing control processing unit 51 and the camera 52.

The capturing control processing unit 51 performs camera control according to the template cut supplied from the moving image creation processing unit 31, and acquires a captured video in which the vehicle 43 and the user are captured by the camera 52. For example, the capturing control processing unit 51 executes initial capturing processing of detecting the vehicle type of the vehicle 43 and detecting the stop position of the vehicle 43, and adjusts the position of the camera 52 according to the stop position of the vehicle 43 in automatic capturing processing of performing camera control according to the template cut so that capturing by the camera 52 is automatically performed. At this time, the capturing control processing unit 51 can adjust the camera position based on the position and posture, for example, of the subject (e.g., vehicle 43 or user who is the driver) in the template cut. Note that the camera position may be adjusted using camera position learning data obtained by learning the relationship between the position and posture of the object and the camera position.

When the driving simulation in the driving simulation system 22 is ended, the capturing control processing unit 51 supplies the moving image creation processing unit 31 with the captured video obtained by capturing the vehicle 43 and the user by the camera 52.

The cloud server 24 provides a service for distributing, for example, an existing promotional video to be referred to when the moving image creation processing unit 31 creates a template cut, a virtual production video to be used when the moving image creation processing unit 31 creates a moving image, and various assets to be used when the simulation processing unit 41 generates an in-simulator video. The cloud server 24 provides a service of issuing an NFT to content produced in the content production system 11.

Note that the content production system 11 illustrated in Fig. 1 has a connection configuration in which the cloud server 24 is connected to the moving image creation system 21 via the network 25, but may have a connection configuration in which the moving image creation system 21, the driving simulation system 22, the camera system 23, and the cloud server 24 are connected via the network 25, for example. The simulation processing unit 41 may be an in vehicle infotainment electric control unit (IVI ECU) mounted in the vehicle 43, or may be a multimedia plug-in unit (MPU) connected to the IVI ECU. The camera 52 may be a system that utilizes a plurality of cameras.

The content production system 11 configured as described above can provide a user experience in which the user drives through a virtual space corresponding to an existing promotional video of the vehicle 43 and tastes the mood of a character in the promotional video. The content production system 11 can provide the content produced using the moving image captured while the user is experiencing driving in the virtual space by the driving simulation at the timing when the driving simulation is ended.

For example, the content production system 11 can provide a service in which the value for the user and the promotion for the vehicle dealer are integrated, such as a service in which the user forms a deep connection with the new vehicle 43 at the vehicle dealer or the like and creates a first memory with the vehicle 43. Then, the content production system 11 can provide a more valuable user experience in which the user completes the production of the content while enjoying the driving simulation and shares a link of the content to which the NFT is assigned through the SNS, for example.

Note that the content production system 11 can adjust the relative positions of the camera 52, the light, the display device 42, and the user to be suitable for capturing in terms of software and hardware according to the position of the user along with the progress of the driving simulation. In addition, the content production system 11 may provide a plurality of image shots selected from a moving image in addition to providing content configured by a moving image.

Fig. 2 is a diagram for describing cuts capturing a state in which a user gets into the vehicle 43.

For example, in a cut capturing a state in which a user gets into the vehicle 43, as illustrated in A of Fig. 2, a video Cut 1 depicting the user performing an operation of opening a door of the vehicle 43 to a video Cut 2 depicting the user sitting on a seat of the vehicle 43 are captured. In order to perform such capturing, the arrangement of the camera 52 with respect to the vehicle 43 when the video Cut 1 is captured (see B of Fig. 2) and the arrangement of the camera 52 with respect to the vehicle 43 when the video Cut 2 is captured (see C of Fig. 2) are instructed by a template cut. Accordingly, the capturing control processing unit 51 can start capturing by the camera 52 according to the template cut, perform camera control to move the camera 52 from the arrangement illustrated in B of Fig. 2 to the arrangement illustrated in C of Fig. 2, and image a state in which the user gets into the vehicle 43.

Fig. 3 is a diagram for describing cuts capturing a state in which the user is driving the vehicle 43 from above the vehicle 43.

For example, in a cut capturing a state in which the user is driving the vehicle 43 from above the vehicle 43, as illustrated in A of Fig. 3, a video Cut 3 depicting the vehicle 43 from above as a whole to a video Cut 4 depicting the user driving the vehicle 43 through the front window of the vehicle 43 are captured. In order to perform such capturing, the arrangement of the camera 52 with respect to the vehicle 43 when the video Cut 3 is captured (see B of Fig. 3) and the arrangement of the camera 52 with respect to the vehicle 43 when the video Cut 4 is captured (see C of Fig. 3) are instructed by a template cut. Accordingly, the capturing control processing unit 51 can start capturing by the camera 52 according to the template cut, perform camera control to move the camera 52 from the arrangement illustrated in B of Fig. 3 to the arrangement illustrated in C of Fig. 3, and image a state in which the user is driving the vehicle 43 from above the vehicle 43.

Capturing of the inside of the vehicle 43 will be described with reference to Fig. 4.

As illustrated in Fig. 4, when the inside of the vehicle 43 is captured, the camera 52 is attached to the distal end of a rig 53, and the camera 52 is inserted into the vehicle 43 through the window of the vehicle 43 to perform capturing. A of Fig. 4 illustrates the arrangement of the camera 52 when the camera 52 performs capturing from the center of the rear seat toward the front of the vehicle 43, and B of Fig. 4 illustrates the arrangement of the camera 52 when the camera 52 captures the user who is driving from the diagonally front on the passenger seat side.

Fig. 5 is a block diagram illustrating a configuration example of the moving image creation processing unit 31.

As illustrated in Fig. 5, the moving image creation processing unit 31 includes a UI control unit 71, a storage 72, a template cut creation unit 73, a communication unit 74, a processing control unit 75, a cut selection unit 76, and a moving image creation unit 77.

The UI control unit 71 controls data exchange with the UI terminal 32. For example, the UI control unit 71 acquires user selection information supplied from the UI terminal 32, and supplies the user selection information to the template cut creation unit 73, the communication unit 74, the cut selection unit 76, and the moving image creation unit 77. The UI control unit 71 also supplies the UI terminal 32 with content including the options of the video (in-simulator video, captured video, and virtual production video) supplied from the cut selection unit 76 and the moving image supplied from the moving image creation unit 77.

The storage 72 holds various types of data such as existing promotional videos to be referred to in the creation of template cuts, virtual production videos to be presented to the user as options of videos to be used in content, and music to be used in content.

The template cut creation unit 73 acquires the existing promotional video of the vehicle 43 indicated by the user selection information supplied from the UI control unit 71 from the storage 72, creates a template cut with reference to each cut constituting the promotional video, and supplies the template cut to the communication unit 74. In addition, in a case where the place indicated by the user selection information supplied from the UI control unit 71 does not match the place where the existing promotional video of the vehicle 43 indicated by the user selection information was captured, the template cut creation unit 73 can create a template cut with reference to each cut constituting the existing promotional video of another vehicle captured at the place indicated by the user selection information. For example, the template cut creation unit 73 can extract main cuts at predetermined time intervals in each scene of the promotional video and create a template cut from the extracted cuts. The template cut creation unit 73 may use learned identification criteria when identifying the main cut and creating the template cut. Note that the identification criteria of the main cuts are learned in advance and held in the template cut creation unit 73.

The communication unit 74 communicates with the simulation processing unit 41 and the capturing control processing unit 51. For example, the communication unit 74 transmits the user selection information supplied from the UI control unit 71 and the template cut supplied from the template cut creation unit 73 to the simulation processing unit 41 and the capturing control processing unit 51, respectively. The communication unit 74 receives the traveling data and the in-simulator video transmitted from the simulation processing unit 41 and supplies the traveling data and the in-simulator video to the cut selection unit 76, and receives the captured image transmitted from the capturing control processing unit 51 and supplies the captured image to the cut selection unit 76.

The processing control unit 75 controls the processing performed by the simulation processing unit 41 and the capturing control processing unit 51. For example, when the processing control unit 75 is notified of the activation of the simulator from the simulation processing unit 41 via the communication unit 74, the processing control unit 75 instructs the simulation processing unit 41 to start the driving simulation. When notified of the start of the driving simulation by the simulation processing unit 41 via the communication unit 74, the processing control unit 75 instructs the capturing control processing unit 51 to start the automatic capturing processing and instructs the simulation processing unit 41 to start in-simulator video capturing processing.

The cut selection unit 76 supplies the UI control unit 71 with the in-simulator video transmitted from the simulation processing unit 41, the captured video transmitted from the capturing control processing unit 51, and the virtual production video read from the storage 72 based on the traveling data transmitted from the simulation processing unit 41. For example, the cut selection unit 76 picks up a virtual production video that is similar to the traveling situation based on the driving data from among a plurality of virtual production videos prepared in advance as material for advertising the vehicle.

Then, the in-simulator video, the captured video, and the virtual production video are presented to the user by the UI control unit 71 as options of the video to be used in the content, and user selection information indicating the video selected by the user from among the videos is supplied to the cut selection unit 76 via the UI control unit 71. In response to this, the cut selection unit 76 supplies the video selected by the user from among the in-simulator video, the captured video, and the virtual production video to the moving image creation unit 77.

The moving image creation unit 77 creates a moving image by adjusting and editing the video selected by the user supplied from the cut selection unit 76 in accordance with the length of the music indicated by the user selection information supplied from the UI control unit 71. Then, the moving image creation unit 77 supplies content in which music is reproduced together with the created moving image to the UI control unit 71, and the UI control unit 71 supplies the content to the UI terminal 32.

Fig. 6 is a block diagram illustrating a configuration example of the simulation processing unit 41.

As illustrated in Fig. 6, the simulation processing unit 41 includes a communication unit 81, a simulator activation processing unit 82, a simulation execution unit 83, and an in-simulator video capturing processing unit 84.

The communication unit 81 communicates with the moving image creation processing unit 31 and the capturing control processing unit 51. For example, the communication unit 81 receives the user selection information and the template cut transmitted from the moving image creation processing unit 31, and supplies the user selection information and the template cut to the simulator activation processing unit 82, the simulation execution unit 83, and the in-simulator video capturing processing unit 84. The communication unit 81 also transmits the in-simulator video supplied from the in-simulator video capturing processing unit 84 to the moving image creation processing unit 31.

The simulator activation processing unit 82 executes simulator activation processing for activating the simulator when the user selection information and the template cut are supplied from the communication unit 81. The simulator activation processing unit 82 arranges the 3DCG model data included in the asset called according to the place indicated by the user selection information in the virtual space in which the vehicle 43 is virtually driven in the driving simulation. Note that the 3DCG is an existing one created by virtual production, a game, or the like. For example, when the place indicated by the user selection information indicates an urban area and a mountainous area, the simulator activation processing unit 82 arranges, in the virtual space, 3DCG model data constituting the urban area such as a group of buildings and an elevated bridge, and 3DCG model data constituting the mountainous area such as a mountain and a forest, as illustrated in A of Fig. 7. Then, the simulator activation processing unit 82 notifies the moving image creation processing unit 31 that the simulator has been activated via the communication unit 81.

When the simulation execution unit 83 is instructed to start the driving simulation from the moving image creation processing unit 31 notified of the activation of the virtual space simulator via the communication unit 81, the simulation execution unit 83 starts the driving simulation and notifies the moving image creation processing unit 31 that the driving simulation has been started. Then, the simulation execution unit 83 executes a driving simulation for virtually driving the vehicle 43 in accordance with the driving data supplied from the vehicle 43 so that each cut in accordance with the template cut can be captured in the virtual space in which the 3DCG model data is placed by the simulation activation processing unit 82.

Thereafter, when the traveling of the vehicle 43 in the virtual space is completed for all cuts that need to be captured according to the template cut, the simulation execution unit 83 ends the driving simulation. The simulation execution unit 83 then creates traveling data indicating the traveling situation (such as traveling position and traveling speed in virtual space) of the vehicle 43 in the driving simulation based on the driving data supplied from the vehicle 43 during the driving simulation, and supplies the traveling data to the moving image creation processing unit 31 via the communication unit 81. The simulation execution unit 83 notifies the capturing control processing unit 51 that the driving simulation has been ended via the communication unit 81. Furthermore, the simulation execution unit 83 generates a simulation video adjusted as if the vehicle 43 is actually driven from the arrangement position of the vehicle 43 traveling in the virtual space during the driving simulation through the display device 42, and causes the display device 42 to display the simulation video.

The in-simulator video capturing processing unit 84 arranges the virtual camera in the virtual space at an angle of view at which the in-simulator video according to the template cut supplied from the communication unit 81 can be captured. Then, when the in-simulator video capturing processing unit 84 is instructed to start the in-simulator video capturing processing by the moving image creation processing unit 31 in response to being notified of the start of the driving simulation by the simulation execution unit 83 via the communication unit 81, the in-simulator video capturing processing unit 84 executes the in-simulator video capturing processing of capturing the cuts to be captured in order by the virtual camera according to the template cut. For example, when the vehicle 43 travels in the virtual space from the urban area toward the mountainous area as illustrated in A of Fig. 7, the in-simulator video capturing processing unit 84 executes in-simulator video capturing processing for capturing, with the virtual camera, from a video Cut 5 in which the vehicle 43 virtually travels in the urban area to a video Cut 6 in which the vehicle 43 virtually travels in the mountainous area as illustrated in B of Fig. 7.

Furthermore, when the cut to be captured is capturing including the user, the in-simulator video capturing processing unit 84 can notify the camera system 23 of a cue for instructing the camera 52 to start capturing via the communication unit 81 in accordance with the template cut.

Then, when the driving simulation by the simulation execution unit 83 is ended, the in-simulator video capturing processing unit 84 ends the in-simulator video capturing processing, and supplies the in-simulator video to the moving image creation processing unit 31 via the communication unit 81.

Fig. 8 is a block diagram illustrating a configuration example of the capturing control processing unit 51.

As illustrated in Fig. 8, the capturing control processing unit 51 includes a communication unit 91, an initial capturing processing unit 92, and an automatic capturing processing unit 93.

The communication unit 91 communicates with the moving image creation processing unit 31 and the simulation processing unit 41. For example, the communication unit 91 receives the user selection information and the template cut transmitted from the moving image creation processing unit 31, and supplies the user selection information and the template cut to the initial capturing processing unit 92 and the automatic capturing processing unit 93. The communication unit 91 transmits the captured video supplied from the automatic capturing processing unit 93 to the moving image creation processing unit 31.

The initial capturing processing unit 92 executes initial capturing processing for detecting the type of the vehicle 43 and detecting the stop position of the vehicle 43 with respect to the display device 42. For example, in the initial capturing processing, the initial capturing processing unit 92 moves the camera 52 to an arrangement in which capturing is able to be performed at an angle of view corresponding to a cut at the time of starting capturing according to the template cut supplied from the communication unit 91, and calibrates the arrangement of the camera 52 based on a stop position of the vehicle 43 with respect to the display device 42 and a reflection of the camera 52, for example.

The automatic capturing processing unit 93 derives a camera work for controlling the operation of the camera 52 and a timing at which the camera 52 performs capturing for each cut based on the template cut supplied from the communication unit 91, and performs camera control so that a captured video according to the template cut can be captured by the camera 52. Then, when the automatic capturing processing unit 93 is instructed to start the automatic capturing processing by the moving image creation processing unit 31 via the communication unit 91, the automatic capturing processing unit 93 starts the automatic capturing processing. For example, in the automatic capturing processing, when the automatic capturing processing unit 93 is notified of a cue for instructing the start of capturing from the in-simulator video capturing processing unit 84 via the communication unit 91, the automatic capturing processing unit 93 captures a cut to be captured by the camera 52 at that timing.

Then, when the automatic capturing processing unit 93 is notified of the end of the driving simulation from the simulation execution unit 83 via the communication unit 81, the automatic capturing processing unit 93 ends the automatic capturing processing. Thereafter, the automatic capturing processing unit 93 transmits the captured video acquired by the automatic capturing processing to the moving image creation processing unit 31 via the communication unit 81.

As described above, the content production system 11 includes the moving image creation processing unit 31, the simulation processing unit 41, and the capturing control processing unit 51, and can provide content produced using a moving image obtained by capturing a state of a user while the user is performing a driving simulation of driving through a virtual space corresponding to an existing promotional video of the vehicle 43. In addition, the content production system 11 can provide a more valuable user experience by secondarily utilizing a 3DCG created by virtual production, a game, or the like.

### Processing Example of Content Production Processing

Content production processing executed in the content production system 11 will be described with reference to Figs. 9 to 15.

Fig. 9 is a sequence diagram for describing an example of the content production processing.

For example, when the content production system 11 is activated, the processing is started, and in step S11, in the moving image creation system 21, the template cut creation unit 73 executes template cut creation processing (see flowchart of Fig. 10 described later). As described later, in the template cut creation processing, the template cut creation unit 73 transmits the template cut created in the template cut creation processing and the user selection information to the driving simulation system 22 and the camera system 23, respectively, via the communication unit 74.

In step S12, in the camera system 23, the initial capturing processing unit 92 receives the template cut and the user selection information transmitted from the moving image creation system 21 in step S11 via the communication unit 91, and executes initial capturing processing (see flowchart of Fig. 11 described later).

In step S13, in the driving simulation system 22, the simulator activation processing unit 82 receives the template cut and the user selection information transmitted from the moving image creation system 21 in step S11 via the communication unit 81. Then, the simulator activation processing unit 82 executes simulator activation processing (see flowchart of Fig. 12 described later), and notifies the moving image creation system 21 that the simulator has been activated via the communication unit 81.

In step S14, in the moving image creation system 21, the processing control unit 75 instructs the driving simulation system 22 to start the driving simulation in response to being notified of the activation of the simulator in step S13 via the communication unit 74.

In step S15, in the driving simulation system 22, the simulation execution unit 83 starts the driving simulation according to the instruction in step S14, and notifies the moving image creation system 21 of the start of the driving simulation via the communication unit 81. The simulation execution unit 83 then executes a driving simulation for virtually driving the vehicle 43 in accordance with the driving data supplied from the vehicle 43 so that each cut that needs to be captured in accordance with the template cut can be captured in the virtual space.

In step S16, in the moving image creation system 21, the processing control unit 75 instructs the camera system 23 to start the automatic capturing processing and instructs the driving simulation system 22 to start the in-simulator video capturing processing in response to being notified of the start of the driving simulation in step S15.

In step S17, in the driving simulation system 22, the in-simulator video capturing processing unit 84 executes in-simulator video capturing processing (see flowchart of Fig. 13 described later) in accordance with the instruction in step S16. As described later, in the in-simulator video capturing processing, the in-simulator video capturing processing unit 84 notifies the camera system 23 of a cue for instructing the camera 52 to start capturing and the end of the driving simulation, for example.

In step S18, in the camera system 23, the automatic capturing processing unit 93 executes automatic capturing processing (see flowchart of Fig. 14 described later) in accordance with the instruction in step S16.

When the automatic capturing processing in step S18 is ended, the processing proceeds to step S19. In step S19, in the camera system 23, the automatic capturing processing unit 93 transmits the captured video acquired by the automatic capturing processing executed in step S18 to the moving image creation system 21 via the communication unit 91.

When the in-simulator video capturing processing in step S17 is ended, the processing proceeds to step S20. In step S20, in the driving simulation system 22, the simulation execution unit 83 transmits the traveling data acquired by the driving simulation executed in step S15 to the moving image creation system 21 via the communication unit 81. Furthermore, in step S20, in the driving simulation system 22, the in-simulator video capturing processing unit 84 transmits the in-simulator video acquired by the in-simulator video capturing processing executed in step S17 to the moving image creation system 21 via the communication unit 81.

In step S21, the moving image creation system 21 executes moving image creation processing (see flowchart of Fig. 15 described later). Then, after the content is provided to the user in the moving image creation processing executed in step S21, the content production processing is ended.

Fig. 10 is a flowchart for describing the template cut creation processing executed in step S11 in Fig. 9.

In step S21, when the user operates the UI terminal 32 to select the vehicle 43 to be test-driven, the place to be driven in the content, and the music to be used in the content, the template cut creation unit 73 acquires the user selection information via the UI control unit 71.

In step S22, the template cut creation unit 73 acquires the existing promotional video of the vehicle 43 selected by the user from the storage 72 according to the user selection information acquired in step S21, and recognizes the place where the promotional video is captured. Then, the template cut creation unit 73 determines whether the place selected by the user matches the place where the existing promotional video of the vehicle 43 selected by the user was captured, based on the user selection information acquired in step S21.

In step S22, when the template cut creation unit 73 determines that the place selected by the user does not match the place where the existing promotional video of the vehicle 43 selected by the user was captured (i.e., the places are different), the processing proceeds to step S23.

In step S23, the template cut creation unit 73 acquires, from the storage 72, the existing promotional video of another vehicle captured at the place selected by the user. Then, the template cut creation unit 73 creates a template cut with reference to each cut constituting the existing promotional video of the other vehicle captured at the place selected by the user.

After the processing in step S23, the processing proceeds to step S24. Alternatively, in step S22, when the template cut creation unit 73 determines that the place selected by the user matches the place where the existing promotional video of the vehicle 43 selected by the user was captured, the processing proceeds to step S24.

In step S24, the template cut creation unit 73 creates a template cut with reference to each cut constituting the existing promotional video of the vehicle 43 selected by the user.

In step S25, the template cut creation unit 73 transmits the user selection information acquired in step S21 and the template cut created in step S23 and step S24 (only template cut created in step S24 when processing of step S23 is not performed) to the simulation processing unit 41 and the capturing control processing unit 51, respectively, via the communication unit 74. After the processing in step S25, the template cut creation processing is ended.

Fig. 11 is a flowchart for describing the initial capturing processing executed in step S12 in Fig. 9.

In step S31, the initial capturing processing unit 92 recognizes the type of the vehicle 43 and detects the stop position of the vehicle 43 with respect to the display device 42 by performing analysis processing on the captured video obtained by the camera 52 capturing the vehicle 43.

In step S32, the initial capturing processing unit 92 receives the user selection information and the template cut transmitted from the moving image creation processing unit 31 in step S25 of Fig. 10 via the communication unit 91.

In step S33, the initial capturing processing unit 92 moves the camera 52 to an arrangement in which capturing is able to be performed at an angle of view corresponding to a cut at the time of starting capturing (e.g., cut capturing state in which user gets into vehicle 43 as illustrated in Fig. 2 described above) according to the template cut received in step S32.

In step S34, the initial capturing processing unit 92 calibrates the arrangement of the camera 52 moved in step S33, based on the stopping position of the vehicle 43 with respect to the display device 42 detected in step S31. For example, the initial capturing processing unit 92 calibrates the arrangement of the camera 52 so as to correspond to a cut at the start of capturing and so that the background when the vehicle 43 and the user are captured is within the display range of the display device 42 (outside of display range of display device 42 is not captured). Note that in a case where the reflection of the camera 52 or the like can be eliminated by post-processing of the 3DCG (e.g., reflection only on body of vehicle 43), the portion may be ignored and passed to the post-processing.

In step S35, the initial capturing processing unit 92 determines whether there is a reflection of the camera 52 (e.g., reflection including reflection on body, glass, or the like of vehicle 43) in the image obtained by capturing by the camera 52 arranged in step S34.

In step S35, in a case where the initial capturing processing unit 92 determines that there is reflection of the camera 52, the processing proceeds to step S36. In step S36, the initial capturing processing unit 92 recalibrates the arrangement of the camera 52 so as to correspond to the cut at the start of capturing, to cause the background when the vehicle 43 and the user are captured to be within the display range of the display device 42, and to avoid reflection of the camera 52.

After the processing of step S36 or when it is determined that there is no reflection of the camera 52 in step S35, the initial capturing processing is ended.

Fig. 12 is a flowchart for describing the simulator activation processing executed in step S13 of Fig. 9.

In step S41, the simulator activation processing unit 82 receives the user selection information transmitted from the template cut creation unit 73 in step S25 of Fig. 10 via the communication unit 81, and calls the asset corresponding to the place selected by the user according to the user selection information.

In step S42, the simulator activation processing unit 82 arranges the 3DCG model data included in the asset read in step S41 in the virtual space (see A of Fig. 7 described above) so that the in-simulation video corresponding to the template cut can be captured by the virtual camera.

In step S43, the simulator activation processing unit 82 arranges the virtual camera in an arrangement in which capturing is able to be performed at an angle of view corresponding to a cut at the time of starting capturing in the virtual space, and then the simulator activation processing is ended.

Fig. 13 is a flowchart for describing the in-simulator video capturing processing executed in step S17 in Fig. 9.

In step S51, the in-simulator video capturing processing unit 84 determines whether the vehicle 43 has started traveling in the virtual space of the driving simulation executed in step S15 of Fig. 9, and stands by until it is determined that the vehicle 43 has started traveling in the virtual space. Then, in step S51, when the in-simulator video capturing processing unit 84 determines that the vehicle 43 has started traveling in the virtual space, the processing proceeds to step S52.

In step S52, the in-simulator video capturing processing unit 84 selects cuts to be captured in order according to the template cut, and determines whether the vehicle 43 is traveling in the virtual space within the capturing range of the cut to be captured.

In step S52, when the in-simulator video capturing processing unit 84 determines that the vehicle 43 is traveling in the virtual space within the capturing range of the cut to be captured, the processing proceeds to step S53.

In step S53, the in-simulator video capturing processing unit 84 determines whether the cut to be captured is capturing including the user in accordance with the template cut.

In step S53, when the in-simulator video capturing processing unit 84 determines that the cut to be captured is capturing including the user, the processing proceeds to step S54.

In step S54, the in-simulator video capturing processing unit 84 notifies the camera system 23 of a cue for instructing the camera 52 to start capturing via the communication unit 81.

After the processing of step S54, or when it is determined in step S53 that the user is not included in the capturing (i.e., only vehicle 43 is captured so that the user is not shown), the processing proceeds to step S55.

In step S55, the in-simulator video capturing processing unit 84 captures the cut to be captured by the virtual camera in accordance with the template cut, and acquires the in-simulator video depicting the vehicle 43 traveling in the virtual space.

After the processing of step S55, or when it is determined that the vehicle 43 is not traveling in the virtual space within the capturing range of the cut to be captured in step S52 (i.e., vehicle 43 is traveling in virtual space outside capturing range of cut to be captured), the processing proceeds to step S56.

In step S56, the in-simulator video capturing processing unit 84 determines whether the traveling of the vehicle 43 in the virtual space of the driving simulation executed in step S15 of Fig. 9 is completed.

If the in-simulator video capturing processing unit 84 determines in step S56 that the vehicle 43 has not completed traveling in the virtual space (i.e., there is cut in which vehicle 43 has not yet traveled in virtual space), the processing returns to step S52, and similar processing is repeated.

On the other hand, in step S56, when the in-simulator video capturing processing unit 84 determines that the traveling of the vehicle 43 in the virtual space is completed, the processing proceeds to step S57. That is, in this case, the driving simulation by the simulation execution unit 83 is ended.

In step S57, the in-simulator video capturing processing unit 84 notifies the camera system 23 of the end of the driving simulation, and then the in-simulator video capturing processing is ended.

Fig. 14 is a flowchart for describing the automatic capturing processing executed in step S18 in Fig. 9.

In step S61, the automatic capturing processing unit 93 receives the template cut transmitted from the moving image creation processing unit 31 in step S25 of Fig. 10 via the communication unit 91, and derives a camera work for controlling the operation of the camera 52 for each cut based on the template cut.

In step S62, the automatic capturing processing unit 93 derives the timing of capturing by the camera 52 for each cut based on the template cut received in step S61.

In step S63, the automatic capturing processing unit 93 determines whether a cue instructing the start of capturing by the camera 52 has been provided through notification from the in-simulator video capturing processing unit 84, and stands by until it is determined that the cue instructing the start of capturing has been provided through notification. For example, in step S54 in Fig. 13 described above, when the in-simulator video capturing processing unit 84 notifies the camera system 23 of a cue instructing the camera 52 to start capturing and the automatic capturing processing unit 93 receives the cue via the communication unit 91, the automatic capturing processing unit 93 determines that the cue instructing the camera 52 to start capturing has been provided through notification, and the processing proceeds to step S64.

In step S64, the automatic capturing processing unit 93 selects cuts to be captured in order according to the template cut, and moves the camera 52 to an arrangement in which capturing is able to be performed at an angle of view corresponding to the cuts to be captured. Then, the automatic capturing processing unit 93 calibrates the arrangement of the cameras 52 based on the stop position of the vehicle 43 with respect to the display device 42 detected by the initial capturing processing unit 92 at step S31 in Fig. 11. For example, the automatic capturing processing unit 93 calibrates the arrangement of the camera 52 so as to correspond to a cut to be captured and so that the background when the vehicle 43 and the user are captured is within the display range of the display device 42 (outside of display range of display device 42 is not captured).

In step S65, the automatic capturing processing unit 93 determines whether there is a reflection of the camera 52 (e.g., reflection including reflection on body, glass, or the like of vehicle 43) in the image obtained by capturing by the camera 52 arranged in step S64.

In step S65, in a case where the automatic capturing processing unit 93 determines that there is reflection of the camera 52, the processing proceeds to step S66. In step S66, the automatic capturing processing unit 93 recalibrates the arrangement of the camera 52 so as to correspond to the cut to be captured, to cause the background when the vehicle 43 and the user are captured to be within the display range of the display device 42, and to prevent reflection of the camera 52.

After the processing of step S66 or when it is determined that there is no reflection of the camera 52 in step S65, the processing proceeds to step S67.

In step S67, the automatic capturing processing unit 93 determines whether the end of the driving simulation has been provided through notification from the in-simulator video capturing processing unit 84. For example, in step S57 of Fig. 13 described above, when the in-simulator video capturing processing unit 84 notifies the camera system 23 of the end of the driving simulation and the automatic capturing processing unit 93 receives the notification via the communication unit 91, the automatic capturing processing unit 93 determines that the end of the driving simulation has been provided through notification.

In step S67, in a case where the automatic capturing processing unit 93 determines that the end of the driving simulation has not been provided through notification, the processing returns to step S63, and similar processing is repeatedly performed.

On the other hand, in step S67, when the automatic capturing processing unit 93 determines that the end of the driving simulation has been provided through notification, the automatic capturing processing is ended.

Fig. 15 is a flowchart for describing the moving image creation processing executed in step S21 in Fig. 9.

In step S71, the cut selection unit 76 receives, via the communication unit 74, the captured video transmitted from the camera system 23 in step S19 in Fig. 9, and also receives the traveling data and the in-simulator video transmitted from the driving simulation system 22 in step S20 in Fig. 9.

In step S72, the cut selection unit 76 picks up a virtual production video that is similar to the traveling situation of the vehicle 43 in the driving simulation indicated by the traveling data received in step S71.

In step S73, the cut selection unit 76 displays the in-simulator video and the captured video received in step S71 and the virtual production video picked up in step S72 on the UI terminal 32 as options for allowing the user to select a video to be used in the content via the UI control unit 71.

Then, when the user selects a video to be used in the content from among the in-simulator video, the captured video, and the virtual production video displayed as the options, user selection information indicating the video selected by the user is supplied to the cut selection unit 76 via the UI control unit 71. In response to this, the cut selection unit 76 supplies the video selected by the user from among the in-simulator video, the captured video, and the virtual production video to the moving image creation unit 77, and the processing proceeds to step S74.

In step S74, the moving image creation unit 77 creates a moving image by adjusting and editing the video supplied from the cut selection unit 76 in step S73 in accordance with the length of the music indicated by the user selection information.

In step S75, the moving image creation unit 77 provides the user with content in which music is reproduced together with the moving image created in step S74, via the UI control unit 71 using the UI terminal 32.

In step S76, the moving image creation unit 77 provides the user with a link for sharing the content on the SNS with the NFT, and then the moving image creation processing is ended.

By executing the content production processing as described above, the content production system 11 can provide content produced using a moving image obtained by capturing a state of a user while the user is performing a driving simulation of driving through a virtual space corresponding to an existing promotional video of the vehicle 43. Accordingly, the content production system 11 can provide a more valuable user experience.

Note that the content production system 11 of the present embodiment can be installed at, for example, a restaurant equipped with a charging station, a shopping mall, an amusement facility, or the like, in addition to the vehicle dealer described above, and can be used to attract customers.

### Configuration Example of Computer

Next, the above-described series of processes (information processing method) can be performed by hardware or software. When the series of processes is performed by software, a program constituting the software is installed on a general-purpose computer or the like.

Fig. 16 is a block diagram illustrating a configuration example of an embodiment of a computer in which a program for executing the above-described series of processes is installed.

The program can be recorded in advance on a hard disk 105 or a ROM 103 as a recording medium built in the computer.

Alternatively, the program can be stored (recorded) in a removable recording medium 111 driven by a drive 109. Such a removable recording medium 111 can be provided as so-called packaged software. Here, examples of the removable recording medium 111 include a flexible disk, a compact disc read only memory (CD-ROM), a magneto optical (MO) disk, a digital versatile disc (DVD), a magnetic disk, and a semiconductor memory.

Note that the program may be installed on a computer from the removable recording medium 111 as described above, or may be downloaded to the computer via a communication network or a broadcasting network and installed on the built-in hard disk 105. That is, the program can be transferred wirelessly from a download site to the computer via an artificial satellite for digital satellite broadcasting, or can be transferred by wire to the computer via a network such as a local area network (LAN) or the Internet.

The computer has a built-in central processing unit (CPU) 102, and an input/output interface 110 is connected to the CPU 102 via a bus 101.

When a command is input by a user operating an input unit 107 via the input/output interface 110, the CPU 102 executes the program stored in the read only memory (ROM) 103 in accordance with the command. Alternatively, the CPU 102 loads the program stored in the hard disk 105 into a random access memory (RAM) 104 and executes the program.

Thus, the CPU 102 performs the processing according to the above-described flowchart or the processing performed by the configuration of the above-described block diagram. Then, the CPU 102 outputs the processing result from an output unit 106 via the input/output interface 110, transmits the processing result from a communication unit 108, or records the processing result in the hard disk 105, as necessary.

Note that the input unit 107 includes a keyboard, a mouse, and a microphone, for example. The output unit 106 includes a liquid crystal display (LCD), and a speaker, for example.

Here, in the present specification, the processing performed by the computer according to the program is not necessarily performed in time series in the order described in the flowchart. That is, the processing performed by the computer according to the program includes processing executed in parallel or in an individual manner (e.g., parallel processing or processing by object).

The program may be processed by one computer (processor) or may be processed in a distributed manner by a plurality of computers. The program may be transferred to a remote computer and executed.

Furthermore, in the present specification, a system means a set of a plurality of constituents (devices, modules (components), and the like), and it does not matter whether all the constituents are in the same housing. Therefore, the system refers to both a plurality of devices stored in separate housings and connected via a network, and one device in which a plurality of modules are stored in one housing.

For example, a configuration described as one device (or processing unit) may be divided and configured as a plurality of devices (or processing units). Conversely, the configurations described above as a plurality of devices (or processing units) may be integrated into one device (or processing unit). It is needless to say that a configuration other than the above-described configuration may be added to the configuration of each device (or each processing unit). When the configuration and operation as the entire system are substantially the same, a part of the configuration of a certain device (or processing unit) may be included in the configuration of another device (or another processing unit).

Furthermore, for example, the present technology can have a configuration of cloud computing in which one function is shared and processed in cooperation by a plurality of devices via a network.

For example, the above-described program can be executed by any device. In the case above, the device only needs to have a necessary function (functional block or the like) to obtain necessary information.

For example, besides being executed by a single device, each step described in the above-described flowchart can cooperatively be executed by a plurality of devices. Furthermore, when a single step includes a plurality of processing operations, the plurality of processing operations included in that single step can be executed by a single device, or can be shared and executed by a plurality of devices. In other words, a plurality of processing operations included in a single step can be executed as processing of a plurality of steps. Conversely, the processing described as a plurality of steps can collectively be executed as one step.

Note that the program executed by a computer may be configured such that the processing of the steps describing the program is executed in time series in the order described in the present specification, or executed in parallel or in an individual manner at a necessary timing such as when being called. That is, the processing of each step may be executed in an order different from the above-described order as long as no contradiction occurs. Furthermore, the processing of the steps describing the program may be executed in parallel with the processing of another program, or may be executed in combination with the processing of another program.

Note that each of a plurality of the present technologies described in the present specification can independently be implemented in a single component as long as no contradiction occurs. It is to be understood that the plurality of the present technologies described in the present specification can be implemented in combination with any of the plurality of the present technologies. For example, a part or all of the present technologies described in any of the embodiments can be implemented in combination with a part or all of the present technologies described in another embodiment. Furthermore, a part or all of any of the present technologies described above can be implemented in combination with another technology that is not described above.

### Combination Example of Configurations

The present technology may also adopt configurations as described below.
(1) An information processing system including:
   a driving simulation system configured to execute a driving simulation using a vehicle selected by a user, and acquire driving data according to an operation of the user on the vehicle and an in-simulator video depicting the vehicle traveling in a virtual space;
   a camera system configured to capture the vehicle and the user with a camera to acquire a captured video; and
   a moving image creation system configured to create a moving image using at least the in-simulator video and the captured video.
(2) The information processing system according to (1), in which
   the moving image creation system includes a template cut creation unit that creates a template cut for instructing capturing of the in-simulator video and the captured video with reference to each cut constituting an existing promotional video of the vehicle selected by the user,
   the driving simulation system includes an in-simulator video capturing processing unit that captures the in-simulator video according to the template cut, and
   the camera system includes an automatic capturing processing unit that performs camera control on the camera that captures the captured video according to the template cut.
(3) The information processing system according to (2), in which the template cut creation unit creates the template cut with reference to each cut constituting an existing promotional video of another vehicle captured at a place selected by the user, when the place selected by the user does not match a place at which the existing promotional video of the vehicle was captured.
(4) The information processing system according to (2) or (3), in which the moving image creation system further includes a cut selection unit that picks up a virtual production video that is similar to a traveling situation based on the driving data from among a plurality of virtual production videos prepared in advance as material for advertising the vehicle, and causes the user to select a cut to be used in creation of the moving image from among a plurality of cuts of the in-simulator video, the captured video, and the virtual production video.
(5) The information processing system according to (4), in which the moving image creation system further includes a moving image creation unit that creates the moving image by adjusting and editing the video of the plurality of cuts selected by the user according to a length of music selected by the user.
(6) The information processing system according to (5), in which the moving image creation system provides the user with content in which the music is reproduced together with the moving image created by the moving image creation unit, and provides the user with the content by assigning a non-fungible token (NFT) to a link for sharing the content on a social networking service (SNS).
(7) The information processing system according to any one of (2) to (6), in which the driving simulation system further includes a display device that displays a simulation video of the place selected by the user during execution of a driving simulation.
(8) The information processing system according to (7), in which the driving simulation system further includes a simulator activation processing unit that arranges 3 dimensional computer graphics (3DCG) model data included in an asset called according to the place selected by the user in the virtual space in which the vehicle is virtually driven in the driving simulation.
(9) The information processing system according to (8), in which the driving simulation system further includes a simulation execution unit that executes a driving simulation of virtually driving the vehicle according to the driving data so that each cut according to the template cut can be captured in the virtual space.
(10) The information processing system according to (9), in which the simulation execution unit generates the simulation video adjusted as if the vehicle is actually driven from an arrangement position of the vehicle traveling in the virtual space through the display device, and causes the display device to display the simulation video.
(11) The information processing system according to any one of (7) to (10), in which the camera system further includes an initial capturing processing unit that detects a vehicle type of the vehicle and detects a stop position of the vehicle with respect to the display device.
(12) The information processing system according to (11), in which the initial capturing processing unit moves the camera to an arrangement in which capturing is able to be performed at an angle of view corresponding to a cut at a time of starting capturing based on the template cut, and calibrates the arrangement of the camera based on a stop position of the vehicle so that a background of capturing by the camera is within a display range of the display device.
(13) The information processing system according to (12), in which when there is a reflection of the camera, the initial capturing processing unit recalibrates the arrangement of the camera so as to avoid the reflection.
(14) The information processing system according to any one of (11) to (13), in which the automatic capturing processing unit moves the camera to an arrangement in which capturing is able to be performed at an angle of view corresponding to a cut to be captured based on the template cut, and calibrates the arrangement of the camera based on a stop position of the vehicle so that a background of capturing by the camera is within a display range of the display device.
(15) The information processing system according to (14), in which when there is a reflection of the camera, the automatic capturing processing unit recalibrates the arrangement of the camera so as to avoid the reflection.
(16) An information processing method including:
   executing, by an information processing system, a driving simulation using a vehicle selected by a user, and acquiring driving data according to an operation of the user on the vehicle and an in-simulator video depicting the vehicle traveling in a virtual space;
   capturing, by the information processing system, the vehicle and the user with a camera to acquire a captured video; and
   creating, by the information processing system, a moving image using at least the in-simulator video and the captured video.
(17) A program for causing a computer of an information processing system to execute information processing including:
   executing a driving simulation using a vehicle selected by a user, and acquiring driving data according to an operation of the user on the vehicle and an in-simulator video depicting the vehicle traveling in a virtual space;
   capturing the vehicle and the user with a camera to acquire a captured video; and
   creating a moving image using at least the in-simulator video and the captured video.

The present embodiment is not limited to the above-described embodiments, and various kinds of modifications can be made without departing from the gist of the present disclosure. In addition, the effects described in the present specification are merely examples and are not limited, and other effects may be obtained.

### Reference Signs List

11 Content production system, 21 Moving image creation system, 22 Driving simulation system, 23 Camera system, 24 Cloud server, 25 Network, 31 Moving image creation processing unit, 32 UI terminal, 41 Simulation processing unit, 42 Display device, 43 Vehicle, 51 Capturing control processing unit, 52 Camera, 53 Rig, 71 UI control unit, 72 Storage, 73 Template cut creation unit, 74 Communication unit, 75 Processing control unit, 76 Cut selection unit, 77 Moving image creation unit, 81 Communication unit, 82 Simulator activation processing unit, 83 Simulation execution unit, 84 In-simulator video capturing processing unit, 91 Communication unit, 92 Initial capturing processing unit, 93 Automatic capturing processing unit.

## Claims

1. An information processing system comprising:
a driving simulation system configured to execute a driving simulation using a vehicle selected by a user, and acquire driving data according to an operation of the user on the vehicle and an in-simulator video depicting the vehicle traveling in a virtual space;
a camera system configured to capture the vehicle and the user with a camera to acquire a captured video; and
a moving image creation system configured to create a moving image using at least the in-simulator video and the captured video.

2. The information processing system according to claim 1, wherein
the moving image creation system includes a template cut creation unit that creates a template cut for instructing capturing of the in-simulator video and the captured video with reference to each cut constituting an existing promotional video of the vehicle selected by the user,
the driving simulation system includes an in-simulator video capturing processing unit that captures the in-simulator video according to the template cut, and
the camera system includes an automatic capturing processing unit that performs camera control on the camera that captures the captured video according to the template cut.

3. The information processing system according to claim 2, wherein the template cut creation unit creates the template cut with reference to each cut constituting an existing promotional video of another vehicle captured at a place selected by the user, when the place selected by the user does not match a place at which the existing promotional video of the vehicle was captured.

4. The information processing system according to claim 2, wherein the moving image creation system further includes a cut selection unit that picks up a virtual production video that is similar to a traveling situation based on the driving data from among a plurality of virtual production videos prepared in advance as material for advertising the vehicle, and causes the user to select a cut to be used in creation of the moving image from among a plurality of cuts of the in-simulator video, the captured video, and the virtual production video.

5. The information processing system according to claim 4, wherein the moving image creation system further includes a moving image creation unit that creates the moving image by adjusting and editing the video of the plurality of cuts selected by the user according to a length of music selected by the user.

6. The information processing system according to claim 5, wherein the moving image creation system provides the user with content in which the music is reproduced together with the moving image created by the moving image creation unit, and provides the user with the content by assigning a non-fungible token (NFT) to a link for sharing the content on a social networking service (SNS).

7. The information processing system according to claim 2, wherein the driving simulation system further includes a display device that displays a simulation video of the place selected by the user during execution of a driving simulation.

8. The information processing system according to claim 7, wherein the driving simulation system further includes a simulator activation processing unit that arranges 3 dimensional computer graphics (3DCG) model data included in an asset called according to the place selected by the user in the virtual space in which the vehicle is virtually driven in the driving simulation.

9. The information processing system according to claim 8, wherein the driving simulation system further includes a simulation execution unit that executes a driving simulation of virtually driving the vehicle according to the driving data so that each cut according to the template cut can be captured in the virtual space.

10. The information processing system according to claim 9, wherein the simulation execution unit generates the simulation video adjusted as if the vehicle is actually driven from an arrangement position of the vehicle traveling in the virtual space through the display device, and causes the display device to display the simulation video.

11. The information processing system according to claim 7, wherein the camera system further includes an initial capturing processing unit that detects a vehicle type of the vehicle and detects a stop position of the vehicle with respect to the display device.

12. The information processing system according to claim 11, wherein the initial capturing processing unit moves the camera to an arrangement in which capturing is able to be performed at an angle of view corresponding to a cut at a time of starting capturing based on the template cut, and calibrates the arrangement of the camera based on a stop position of the vehicle so that a background of capturing by the camera is within a display range of the display device.

13. The information processing system according to claim 12, wherein when there is a reflection of the camera, the initial capturing processing unit recalibrates the arrangement of the camera so as to avoid the reflection.

14. The information processing system according to claim 11, wherein the automatic capturing processing unit moves the camera to an arrangement in which capturing is able to be performed at an angle of view corresponding to a cut to be captured based on the template cut, and calibrates the arrangement of the camera based on a stop position of the vehicle so that a background of capturing by the camera is within a display range of the display device.

15. The information processing system according to claim 14, wherein when there is a reflection of the camera, the automatic capturing processing unit recalibrates the arrangement of the camera so as to avoid the reflection.

16. An information processing method comprising:
executing, by an information processing system, a driving simulation using a vehicle selected by a user, and acquiring driving data according to an operation of the user on the vehicle and an in-simulator video depicting the vehicle traveling in a virtual space;
capturing, by the information processing system, the vehicle and the user with a camera to acquire a captured video; and
creating, by the information processing system, a moving image using at least the in-simulator video and the captured video.

17. A program for causing a computer of an information processing system to execute information processing comprising:
executing a driving simulation using a vehicle selected by a user, and acquiring driving data according to an operation of the user on the vehicle and an in-simulator video depicting the vehicle traveling in a virtual space;
capturing the vehicle and the user with a camera to acquire a captured video; and
creating a moving image using at least the in-simulator video and the captured video.
